# EUROPÄISCHE PATENTSCHRIFT

(11) **EP 2 106 877 B1**
(45) Veröffentlichungstag und Bekanntmachung des Hinweises auf die Patenterteilung: **02.03.2011**
(21) Anmeldenummer: 09156642.2
(22) Anmeldetag: 30.03.2009
(51) Int. Cl.: B23P 15/00, F01D 5/34, B23H 9/10, B23C 3/18

(54) **Verfahren zur Fertigung integral beschaufelter Rotoren**
Method for the fabrication of integrally bladed rotors
Procédé de fabrication d'un disque aubagé monobloc

(30) Priorität: 04.04.2008 DE 102008017494
(43) Veröffentlichungstag der Anmeldung: 07.10.2009
(73) Patentinhaber: Rolls-Royce Deutschland Ltd & Co KG, 15827 Blankenfelde-Mahlow (DE)
(72) Erfinder: Riedel, Gregor, 63654 Büdingen (DE); Kappmeyer, Gregor, 61352 Bad Homburg (DE)

(56) Entgegenhaltungen:
- EP-A- 0 327 657
- WO-A-2006/012852
- DE-A1-102004 051 854
- DE-A1-102006 002 617
- US-A1- 2003 024 825
- US-A1- 2003 039 547

## Beschreibung

Die Erfindung betrifft ein Verfahren zur Fertigung integral beschaufelter Rotoren oder Statoren für Gasturbinentriebwerke, bei dem der durch die Druck- und Saugseite sowie die Annulusfläche begrenzte Raum zwischen den Schaufeln durch eine Kombination aus einem Trennschneidverfahren und spanender Formgebung vom Umfang eines Ringes oder einer Scheibe aus dem vollen Material ausgeformt wird.

Ein solches Verfahren ist aus der US 2003 024825, die dem nächstliegenden Stand der Technik entspricht, bekannt.

Gasturbinenrotoren und insbesondere die Rotoren der Kompressoren von Gasturbinentriebwerken werden unter dem Aspekt der Zuverlässigkeit, Gewichtseinsparung, Leistungssteigerung und Lebensdauer mit einer am kreisförmigen Außenumfang einer Scheibe oder Trommel integral ausgebildeten, ein- oder mehrstufigen Beschaufelung ausgeführt. Derartige Bauteile werden als Blisks oder Blisktrommeln bezeichnet. Die Herstellung von Blisks erfolgt bekanntermaßen durch Verschweißen, insbesondere Reibschweißen, separat gefertigter Schaufeln mit der Umfangsfläche der vorzugsweise geschmiedeten Scheibe oder Trommel oder durch einen von der Außenfläche ausgehenden Materialabtrag aus dem vollen Material mittels spangebender oder chemischer Verfahren. Nach dem Ausformen der Schaufeln mit den bekannten Materialabtragsverfahren erfolgt eine Feinbearbeitung der Schaufelflächen und -kanten sowie des zwischen den Schaufeln nach dem Materialabtrag verbliebenen, als Annulus bezeichneten Bodens.

Die Ausformung der Bliskschaufeln aus dem vollen Material erfolgt üblicherweise in einer fünfachsigen Fräsbearbeitung, und zwar zunächst durch einen Schruppfräsprozess, in dem der größte Teil des Materials zwischen zwei gegenüberliegenden Flächen benachbarter Schaufeln abgetragen wird, und anschließend durch Schlichtfräsen zur Fertigbearbeitung der Schaufelkontur. Die Bearbeitungsdauer und der Werkzeugverschleiß und damit auch die Herstellungskosten sind bereits bei Blisks aus Titanwerkstoffen sehr hoch und bei Verwendung von hochwarmfesteren Werkstoffen wie Nickelbasislegierungen (zum Beispiel Inconel 718) noch deutlich höher. Besonders hoch ist der Fertigungsaufwand bei aus dem Vollen gefrästen großen Bliskschaufeln, und zwar nicht nur wegen des großen herauszufräsenden Materialvolumens, sondern auch wegen der eingeschränkten Zugänglichkeit der Oberflächen der in geringem Abstand angeordneten und zudem gewölbten und verdrehten Schaufeln für die Fräswerkzeuge und wegen der Schwingungsanfälligkeit der größeren Schaufeln bei der Bearbeitung und der infolgedessen reduzierten Zerspanungsparameter.

Die DE 10 2004 051 854 A1 beschreibt ein Verfahren zur Herstellung von integral beschaufelten Rotoren, bei dem in einem Rotorgrundkörper durch elektrochemische Bearbeitung zunächst Rohschaufeln ausgeformt werden, die anschließend, insbesondere in einem PECM-Prozess, zur Herstellung strömungstechnischer Schaufeloberflächen elektrochemisch weiterbearbeitet werden.

Gemäß der US 2003/0024825 A1 wird zur Herstellung einer Blisk für ein Gasturbinentriebwerk ein Verfahren vorgeschlagen, bei dem zur Ausformung der Bliskschaufeln in einen Scheibenrohling mittels eines Schneidrades durch Elektroerosion gekurvte Schlitze eingeschnitten werden und anschließend eine elektrochemische Fertigbearbeitung der Schaufeln erfolgt.

Der Erfindung liegt die Aufgabe zugrunde, ein Verfahren zur Herstellung von Blisks mit aus dem vollen Material ausgeformten Schaufeln anzugeben, mit dem insbesondere bei hochwarmfesten und sprödharten Werkstoffen eine Reduzierung der Herstellungskosten erreicht werden kann.

Erfindungsgemäß wird die Aufgabe mit einem Verfahren gemäß den Merkmalen des Patentanspruchs 1 gelöst. Weitere Merkmale und vorteilhafte oder zweckmäßige Weiterbildungen der Erfindung sind Gegenstand der Unteransprüche.

Kern der Erfindung, die sowohl bei Rotoren als auch Statoren mit aus dem vollen Material erzeugter integraler Beschaufelung angewendet werden kann, ist die Ausbildung einer steifigkeitsoptimierten Vorbearbeitungskontur durch Trennschneiden, vorzugsweise abrasives Wasserstrahlschneiden, der Schaufelzwischenräume mit im Wesentlichen geraden Trennschnitten, an das sich ein Schlichtfräsprozess zur Erzeugung der Fertigkontur anschließt. Die so hergestellte Vorbearbeitungsgeometrie ist hinsichtlich ihrer Steifigkeit so dimensioniert, dass anschließend eine ungestörte Fertigbearbeitung durch Schlichten erfolgen kann. Beim Trennschneiden in dem Zwischenraum zwischen zwei benachbarten Schaufeln werden in bestimmtem Abstand von den beiden gegenüberliegenden Schaufelseiten gerade, der Verdrehung der Schaufeln folgende Schnittflächen erzeugt, die über Übergangsflächen in eine im Abstand zur vorgesehenen Annulusfläche erzeugte Kegelmantelfläche übergehen. Gegenüber der bekannten, ausschließlich spangebenden Ausbildung der Schaufeln zeichnet sich das erfindungsgemäße Verfahren durch verminderte Werkzeugverschleiß und geringere Werkzeugkosten aus. Die Schaufeln werden bei der Formgebung thermisch und mechanisch weniger belastet, so dass Gefügeveränderungen und Deformationen vermieden werden und Schaufeln aus sprödhartem und hochwarmfestem Material, die zudem eine große Länge aufweisen könnten, in hoher Qualität gefertigt werden können. Aufgrund der auf das Schlichten begrenzter, Fräsbearbeitung sind die Zwischenräume zwischen großen Schaufeln besser zugänglich und die Schwingungsanfälligkeit dieser Schaufeln wird verringert. Der Zeit- und Kostenaufwand für die Bliskfertigung kann deutlich reduziert werden.

Gemäß einem weiteren Merkmal der Erfindung erfolgt die Ausbildung der Vorbearbeitungskontur in einer fünfachsigen Wasserstrahl-Schneidanlage, die auf der Basis eines 3D-Modells der Vorbearbeitungskontur programmiert wird. Die Regelflächen des 3D-Modells zum Schneiden der geraden Trennflächen in Längsrichtung der Schaufeln und in einem entsprechend der Schaufelverdrehung bemessenen Schnittwinkel werden von in Querrichtung der Schaufeln verlaufenden Abstandslinien gebildet, die in einem bestimmten Abstand parallel zu an die Druck- und die Saugseite der Schaufel in der vorgesehenen. Schaufelendkontur angelegten tangentialen Linien verlaufe. Das 3D-Modell für die Programmierung der Wasserstrahl-Schneidanlage wird unter Einbeziehung der bei der an das Trennschneiden anschließenden Schlichtbearbeitung am Werkstück wirkenden Kräfteverhältnisse in einer FEM-(Finite-Elemente Modell)-Simulation überprüft und gegebenenfalls korrigiert.

In Ausgestaltung der Erfindung kann das Trennschneiden der geraden Trehnflächen entsprechend den Regelflächen des 3D-Modells auch durch Laserschneiden, Plasmaschneiden oder Drahterodieren erfolgen.

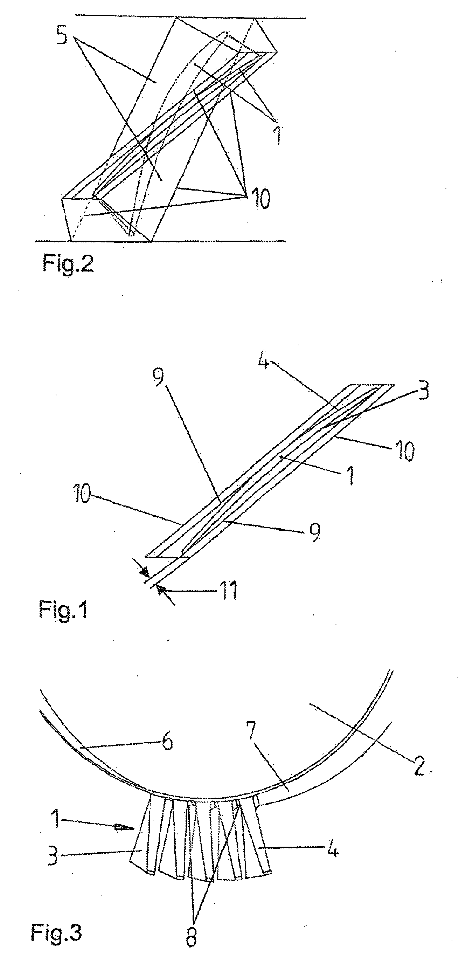

Ein Ausführungsbeispiel der Erfindung wird in Verbindung mit der Zeichnung, die in den. Figuren 1 bis 3 die Erzeugung einer Hilfsgeometrie mittels einer CAD-Konstruktionssoftware zum Trennschneiden einer Vorform der Bliskschaufeln einer Verdichterstufe aus dem vollen Material wiedergibt, näher erläutert. Es zeigen:
- Fig.: 1 einen waagerechten Schritt einer zu fertigenden Bliskschaufel mit saug- und druckseitig anlie- genden tangentialen Linien und diesen zugeordne- ten Abstandslinien;
- Fig. 2: eine Darstellung des auf der Grundlage der tan- gentialen Linien nach Fig. 1 erzeugten Volumen- modells einer Bliskschaufelvorform zum Wasser- strahlschneiden der Seitenflächen; und
- Fig. 3: eine Teilansicht eines 3D-Modells einer Blisk als Basis für die Simulation der Steifigkeit der Schaufelvorform und die NC-Programmierung des Wasserstrahlschneidens und Fräsens der einzelnen Bliskschaufeln aus dem vollen Material.

Die Ausformung der einzelnen Bliskschaufeln 1, die hier beispielhaft für eine im vorderen Bereich eines Verdichters angeordnete Blisk vorgesehen sind und eine dementsprechend große Höhe aufweisen und zudem aus einer hochwarmfesten Legierungen, wie z.B. einer Nickelbasislegierungen bestehen, erfolgt in einem ersten Verfahrensschritt auf der Grundlage eines mittels einer Konstruktionssoftware erstellten 3D-Schaufelmodells (Fig. 2/3) durch gerades Trennschneiden entlang einer im Abstand von der Druckseite 3 und der Saugseite 4 gebildeten Regelfläche 5, einer im Abstand von der Annulusfläche 6 befindlichen Kegelmantelfläche 7 und einer zwischen der Kegelmantelfläche 7 und der Regelfläche 5 verbleibenden übergangs fläche 8. Die geraden Trennschnitte werden durch fünfachsiges abrasives Wasserstrahlschheiden ausgeführt, für das entsprechend dem jeweils eingesetzten Wertstoff bestimmte Parameter wie Art des Abrasivmediums, Massen- bzw. Volumehstrom von Abrasivmedium bzw. wasser, Düsendurchmesser, Düsenabstand vom Werkstück, Vorschubgeschwindigkeit und Arbeitsdruck gewählt werden. An die Herstellung der Vorbearbeitungsgeometrie durch Wasserstrahlschneiden schließt sich eine Fertigbearbeitung zur Ausbildung der endgüitigen Kontur des Schaufelzwischenraums durch Schlichtfräsen an.

Die Vorbearbeituhgsgeometrie oder -kontur muss jedoch in Abhängigkeit von der statischen und dynamischen Belastung bei der Schlichtbearbeitung, und zwar unter Einbeziehung der Zerspankräfte, Einspannbedingungen, Werkstoffeigenschaften und Zerspankraftrichtungen, so vorgefertigt werden, dass die statische und dynamische Steifigkeit der Schaufel bei der Fertigbearbeitung gewährleistet ist. Hierzu erfolgt die Erzeugung der Regelflächen 5 im Schaufelmodell durch an den beiden gegenüberliegenden Schaufeloberflächen angelegte parallele tangentiale Linien 9 und in gleichmäßigem Abstand von diesen erzeugte Abstandslinien 10. aus denen dann die beiderseitigen Regelflächen 5 gebildet werden. Anschließend wird im 3D-Schaufelmodell die im Abstand von der Annulusfläche 6 verlaufend Kegelmantelfläche 7 und danach die Übergangsfische 8, zwischen der Kegelmantelfläche 7 und der Regelflache 5 erzeugt. Die statische und dynamische Steifigkeit der zuvor erstellten Vorbearbeitungsgeometrie wird mit Hilfe eines "Finite-Elemente-Berechnungsprogramms" unter Berücksichtigung der bei der spangebenden Fertigbearbeitung der Schaufeln zu erwartenden Belastungsverhältnisse simuliert. Gegebenenfalls werden die Regelflächen 5 und die Kegelmantel- und Übergangsflächen 7, 8 im Ergabnis der Berechnungen modifiziert.

Mit dem Wasserstrahlschneiden aus dem vollen Material einner Scheibe 2 oder eines Ringes durch gerade Trennschnitte mit sich änderndem Schnittwinkel entsprechend den ermittelten Regelflächen sowie den Kegelmantel- und Übergangsflächen wird eine steifigkeitsoptimierte Kontur für die anschließende Fertigbearbeitung in einem fünfachsigen Fräsprozess, in dem die Schaufelflächen lediglich durch Schlichten ihre Endkontur erhalten, erzeugt.

Das Ausschneiden des zwischen den Schaufeln liegenden Raums durch gerade Trennschnitte Zur Erzeugung einer steifigkeitsoptimierten Kontur für den nachfolgenden Schlichtprozess senkt gegenüber der reinen Fräsbearbeitung aus dem vollen Material die Bearbeitungszeit und die Werkzeugkosten und damit auch die Herstellungskosten und wird vorteilhaft bei der Bearbeitung hochwarmfester und sprödharter Werkstoffe eingesetzt. Das gleichzeitige Ausschneiden mehrerer Schaufelzwischenräume durch Wasserstrahlschneiden in einer Mehrkopf-Wasserstrahlanlage ist möglich.

Die Erfindung ist nicht auf das zuvor erläuterte Ausführungsbeispiel beschränkt. Beispielsweise ist es denkbar, anstelle des abrasiven Wasserstrahlschneidens andere Schneidverfahren, wie zum Beispiel das Laserstrahlschneiden, das Plasmastrahlschneiden oder das Drahterodieren, anzuwenden. Zudem können auf die gleiche Art auch Statoren mit integraler Beschaufelung gefertigt werden.

### Bezugszeichenliste

- 1: Schaufel
- 2: Blisk (Scheibe)
- 3: Druckseite
- 4: Saugseite
- 5: Regelfläche
- 6: Annulusfläche
- 7: Kegelmantelfläche
- 8: Übergangs fläche
- 9: Tangentiale Linien
- 10: Abshandslinien

## Patentansprüche

1. Verfahren zur Fertigung integral beschaufelter Rotoren oder Statoren für Gasturbinentriebwerke, bei dem der durch die Druck- und Saugseite (3, 4) sowie die Annulusfläche (6) begrenzte Raum zwischen den Schaufeln (1) durch eine Kombination aus einem Trennschneidverfahren und spanender Formgebung vom Umfang eines Ringes oder einer Scheibe (2) aus dem vollen Material ausgeformt wird, **dadurch gekennzeichnet, dass** zunächst in einem Trennschneidverfahren im Abstand von der Druck- und der Saugseite (3, 4) entlang gerader Regelflächen (5) mit sich entsprechend der Schaufelverdrehung änderndem Schnittwinkel und entlang einer von der Annulusfläche (6) beabstandeten Kegelmantelfläche (7) sowie entlang einer Übergangsfläche (8) zwischen dieser und den Regelflächen (5) eine steifigkeitsoptimierte Vorbearbeitungskontur ausgeschnitten wird und anschließend in einem Schlichtfräsprozess die Fertigkontur der Saug- und Druckseite (3, 4), der Annulusfläche (6) und einer Übergangsfläche zwischen diesen ausgebildet wird.

2. Verfahren nach Anspruch 1, **dadurch gekennzeichnet, dass** in einem für die CNC-Programmierung vorgesehenen 3D-Modell die Regelflächen (5) durch quer zur Schaufel verlaufende, über die Länge der Schaufel angeordnete Abstandslinien (10) gebildet sind, die sich in bestimmtem Abstand parallel zu an die Druck- und Saugseite der vorgesehenen Fertigkontur angelegten, jeweils parallel zueinander verlaufenden tangentialen Linien (9) erstrecken.

3. Verfahren nach Anspruch 2, **dadurch gekennzeichnet, dass** das 3D-Modell der Vorbearbeitungskontur für die CNC-Programmierung unter Berücksichtigung der Zerspanungspararneter in einer "Finite Elemente Modelle-Simulation zum Nachweis einer ausreichenden statischen und dynamischen Steifigkeit für die nachfolgende spangebende Fertigbearbeitung nachgerechnet und gegebenenfalls korrigiert wird.

4. Verfahren nach Anspruch 1, **dadurch gekennzeichnet, dass** das Trennschneiden zur Ausbildung der steifigkeitsoptimierten Vorbearbeitungskontur durch fünfachsiges abrasives Wasserstrahlschneiden erfolgt.

5. Verfahren nach Anspruch 1, **dadurch gekennzeichnet, dass** das Trennschneiden mittels Laserstrahlschneiden oder Plasmastrahlschneiden oder Drahterodieren durchgeführt wird.

## Claims

1. Method for the fabrication of integrally bladed rotors or stators for gas-turbine engines, where the space between the blades (1) confined by the pressure and suction side (3, 4) as well as the annulus surface (6) is shaped by a combination of cutting and machining from the solid material, starting at the periphery of a ring or disk (2), **characterized in that** first a stiffness-optimized pre-machining contour is cut out in a cutting process at a certain distance from the pressure and suction side (3, 4) along straight control surfaces (5) at a cutting angle varying in correspondence with the blade twist and along a conical surface (7) extending at a certain distance from the annulus surface (6) as well as along a transition surface (8) between the latter and the control surfaces (5), and subsequently in a finish grinding process the final contour of the suction and pressure side (3, 4), of the annulus surface (6) and of a transition surface between the latter is produced.

2. Method in accordance with Claim 1, **characterized in that** in a 3D model provided for CNC programming the control surfaces (5) are established by distance lines (10) arranged transversely to the blade and over the length of the blade, with these distance lines (10) extending at a certain distance and in parallel to tangential lines (9) running parallel to each other and being applied to the pressure and suction side of the intended final contour.

3. Method in accordance with Claim 2, **characterized in that** the 3D model of the pre-machining contour for CNC programming is reviewed and, if necessary, modified, taking into account the cutting and machining parameters in a FEM (finite element model) simulation for proving sufficient static and dynamic stiffness for the following finish machining process.

4. Method in accordance with Claim 1, **characterized in that** cutting for providing the stiffness-optimized pre-machining contour is accomplished by five-axis abrasive waterjet cutting.

5. Method in accordance with Claim 1, **characterized in that** cutting is accomplished by laser beam cutting or plasma beam cutting or wire spark erosion.

## Revendications

1. Procédé de fabrication de rotors ou de stators intégralement aubagés pour moteurs à turbine à gaz, dans lequel l'espace entre les aubes (1) limité par les côtés refoulement et aspiration (3, 4) ainsi que par la surface de la zone annulaire (6) est façonné dans la masse par une combinaison de découpage et de façonnage par enlèvement de copeaux du pourtour d'un anneau ou d'un disque (2), **caractérisé en ce que** tout d'abord, dans un procédé de découpage, est découpé un profil de pré-usinage optimisé en rigidité à distance des côtés refoulement et aspiration (3, 4) le long de surfaces de contrôle rectilignes (5) avec un angle de coupe se modifiant en fonction de la torsion de l'aube, et le long d'une surface conique (7) distante de la surface de la zone annulaire (6) ainsi que le long d'une surface de transition (8) entre celle-ci et les surfaces de contrôle (5), puis dans un procédé de fraisage de finition, sont formés les profils définitifs des côtés aspiration et refoulement (3, 4), de la surface de la zone annulaire (6) et d'une surface de transition entre ceux-ci.

2. Procédé selon la revendication n° 1, **caractérisé en ce que** dans un modèle 3D prévu pour la programmation de la commande numérique, les surfaces de contrôle (5) sont formées par des lignes d'espacement (10) disposées transversalement par rapport à l'aube et sur la longueur de l'aube, sachant que ces lignes d'espacement (10) s'étendent à une certaine distance parallèlement à des lignes tangentielles (9) respectivement parallèles entre elles et appliquées sur les côtés refoulement et aspiration du profil définitif prévu.

3. Procédé selon la revendication n° 2, **caractérisé en ce que** le modèle 3D du profil de pré-usinage pour la programmation de la commande numérique est de nouveau calculé et corrigé le cas échéant en tenant compte des paramètres d'enlèvement de copeaux dans une simulation de « modèle d'éléments finis » afin d'apporter la preuve que la rigidité statique et dynamique est suffisante pour le finissage suivant par enlèvement de copeaux.

4. Procédé selon la revendication n° 1, **caractérisé en ce que** la découpe pour former le profil de pré-usinage optimisé en rigidité est effectuée par découpage au jet d'eau abrasif à cinq axes.

5. Procédé selon la revendication n° 1, **caractérisé en ce que** la découpe est réalisée par découpage au laser ou découpage au jet de plasma ou étincelage par fil.
